# FASCICULE DE BREVET EUROPEEN

(11) **EP 1 669 192 B1**
(45) Date de publication et mention de la délivrance du brevet: **07.05.2008**
(21) Numéro de dépôt: 05292497.4
(22) Date de dépôt: 25.11.2005
(51) Int. Cl.: B32B 27/08, B32B 1/08, F16L 11/04

(54) **Tube fluoropolymère/Evoh/PA modifié**
Fluorpolymer/EVOH/modifiziertes PA - Schlauch
Tube fluorpolymer/EVOH/modified PA

(30) Priorité: 13.12.2004 FR 0413211
(43) Date de publication de la demande: 14.06.2006
(73) Titulaire: NOBEL PLASTIQUES, 78300 Poissy (FR)
(72) Inventeur: Cheng, Cyrielle, 85160 Saint-Jean de Monts (FR)
(74) Mandataire: Lavialle, Bruno François Stéphane

(56) Documents cités:
- US-A1- 2003 175 457
- US-A1- 2005 087 249

## Description

La présente invention concerne un tube multicouche utilisable en particulier pour le transport d'hydrogène, notamment en association avec des piles à combustible.

### ARRIERE PLAN DE L'INVENTION

Il est connu des tubes pour le transport d'hydrogène réalisés en métal. Le métal utilisé est généralement un acier inoxydable ou un aluminium. Ces tubes ont une masse relativement importante qui les pénalise pour une utilisation sur des véhicules automobiles et sont rigides, ce qui rend leur implantation relativement difficile dans une espace étroit en particulier. En outre, ces tubes risquent d'être corrodés par le fluide véhiculé.

Pour obvier à cet inconvénient, on a pensé à réaliser ces tubes en élastomère. Cependant, ces tubes ont une durée de vie relativement courte, et ce d'autant plus que ces tubes ont une mauvaise tenue au fluide véhiculé. La mauvaise tenue au fluide transporté se traduit par une dégradation du tube entraînant une libération de particules dans le fluide. De telles particules risquent de détériorer la pile à combustible ou à tout le moins d'en affecter le fonctionnement. Ces tubes sont de plus encore relativement chers.

Il est par ailleurs connu du document US 2003/0175457 (JOUSSE FRANCK et al) une structure multicouche de réservoir d'hydrogène comportant une couche de polyamide, une couche d'éthylène-vinyle alcool et une couche de polyéthylène.

### OBJET DE L'INVENTION

Il serait donc intéressant de disposer d'un tube en matière plastique présentant de meilleures performances que les tubes connus.

### BREVE DESCRIPTION DE L'INVENTION

A cet effet, on prévoit, selon l'invention, un tube comportant une couche interne en fluoropolymère, une couche intermédiaire en copolymère éthylène vinyle alcool et une couche externe en polyamide.

Le tube ainsi formé présente une basse perméabilité à l'hydrogène mais également à l'oxygène, au dioxyde de carbone, au dioxyde de souffre, aux oxydes d'azote... De plus, le tube ne se dégrade que peu ou pas au contact du fluide transporté de sorte que le fluide transporté reste propre. Ce tube peut de plus être relativement souple pour faciliter son implantation dans le circuit. La fabrication du tube est en outre relativement simple puisqu'il peut être réalisé par extrusion multicouche et être thermoformé par la suite si besoin en est.

Selon un mode de réalisation particulier, le fluoropolymère est un éthylène tétrafluoréthylène (ETFE).

L'ETFE est particulièrement intéressant car ce matériau présente une basse perméabilité aux gaz précités et plus particulièrement à l'hydrogène, est résistant à la température et à la corrosion et possède une bonne tenue chimique et une faible aptitude à l'absorption d'eau.

Dans une variante plus économique, le fluoropolymère est un polyfluorure de vinylidène (PVDF).

De préférence, le polyamide est un polyamide 12 (PA-12).

Ce matériau a des propriétés mécaniques et chimiques le rendant particulièrement bien adapté à protéger le tube des agressions extérieures.

De préférence encore le polyamide est modifié pour former une barrière à l'hydrogène.

Le polyamide de la couche externe présente alors une faible perméabilité à l'hydrogène.

D'autres caractéristiques et avantages de l'invention ressortiront à la lecture de la description qui suit d'un mode de réalisation particulier non limitatif de l'invention.

### BREVE DESCRIPTION DES DESSINS

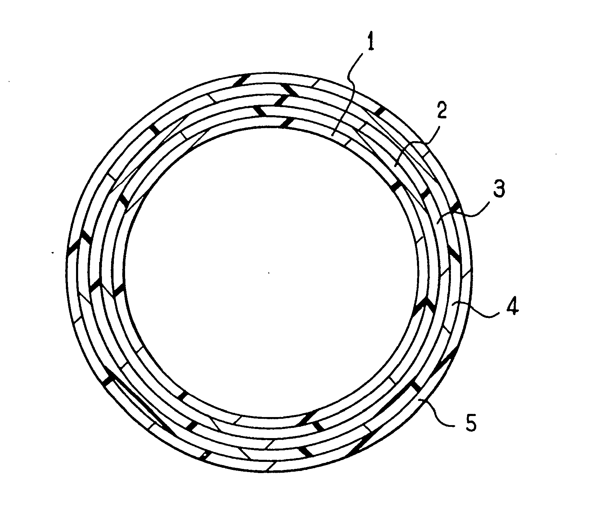

Il sera fait référence à la figure unique annexée représentant en coupe transversale un tuyau conforme à l'invention.

### DESCRIPTION DETAILLEE DE L'INVENTION

En référence à la figure, le tube conforme à l'invention comprend une couche interne 1, une couche de liaison 2, une couche intermédiaire 3, une couche de liaison 4, et une couche externe 5.

La couche interne 1 est réalisée en éthylène tétrafluoréthylène (ETFE). En variante, la couche interne 1 peut être réalisée en polyfluorure de vinylidène (PVDF).

La couche intermédiaire 3 est une couche en un copolymère éthylène vinyle alcool (EVOH).

La couche intermédiaire 3 est une couche barrière à l'oxygène. La fonction de barrière à l'oxygène est exercée vis-à-vis de l'oxygène provenant du fluide et de l'oxygène provenant de l'extérieur dé la conduite afin de protéger la couche interne 1 de la corrosion.

Avantageusement, le matériau de la couche intermédiaire 3 présente une basse perméabilité à l'hydrogène et au carburant.

La couche externe 5 est une couche en polyamide (PA) modifié, ici du polyamide 12 (PA-12). La couche externe 5 a une double fonction : protéger le tube des agressions extérieures et faire barrière à l'hydrogène. Ce matériau présente naturellement de bonnes propriétés mécaniques et chimiques pour assurer sa fonction de protection. Le polyamide utilisé a été en outre modifié de façon connue en soi pour être imperméable à l'hydrogène afin de constituer une couche barrière à l'hydrogène, et être imperméable également à la vapeur d'eau.

Les couches de liaison 2 et 4 sont réalisées en un même matériau présentant des propriétés d'adhésion vis-à-vis de l'EVOH, de l'ETFE et du PA-12. Le matériau des couches de liaison est ici réalisé à base de polyamide modifié pour pouvoir adhérer sur les trois matériaux précités. Ce matériau présente une bonne résistance à l'hydrogène et à l'humidité.

Bien entendu, l'invention n'est pas limitée au mode de réalisation décrit et on peut y apporter des variantes de réalisation sans sortir du cadre de l'invention tel que défini par les revendications.

En particulier, le tube de l'invention peut également être utilisé pour le transport de carburant.

En outre, le tube peut comprendre d'autres couches intermédiaires, notamment entre la couche interne 1 de polymère fluoré et la couche intermédiaire 3 en EVOH.

De plus, la couche de liaison 4 est facultative si le polyamide de la couche externe 5 est modifié pour adhérer à l'EVOH de la couche intermédiaire 3.

## Revendications

1. Tube comportant une couche interne (1) en fluoropolymère, une couche intermédiaire (3) en copolymère éthylène vinyle alcool (EVOH) et une couche externe (5) en polyamide (PA).

2. Tube selon la revendication 1, **caractérisé en ce que** le fluoropolymère est un éthylène tétrafluoréthylène (ETFE).

3. Tube selon la revendication 1, **caractérisé en ce que** le fluoropolymère est un polyfluorure de vinylidène (PVDF).

4. Tube selon la revendication 1, **caractérisé en ce que** le polyamide est un polyamide 12 (PA-12).

5. Tube selon la revendication 1 ou la revendication 4, **caractérisé en ce que** le polyamide est modifié pour former une barrière à l'hydrogène.

6. Tube selon la revendication 1, **caractérisé en ce qu'**il comprend une couche de liaison (2) de la couche intermédiaire (3) et de la couche interne (1).

7. Tube selon la revendication 1, **caractérisé en ce qu'**il comprend une couche de liaison (4) de la couche intermédiaire (3) et de la couche externe (5).

8. Tube selon la revendication 6 ou la revendication 7, **caractérisé en ce que** la couche de liaison (2, 4) est à base de polyamide (PA) modifié pour adhérer aux couches adjacentes.

## Claims

1. A tube comprising an inner layer (1) of fluoropolymer, an intermediate layer (3) of ethylene vinyl alcohol copolymer (EVOH), and an outer layer (5) of polyamide (PA).

2. A tube according to claim 1, **characterized in that** the fluoropolymer is an ethylene tetrafluoroethylene (ETFE).

3. A tube according to claim 1, **characterized in that** the fluoropolymer is a polyvinylidene fluoride (PVDF).

4. A tube according to claim 1, **characterized in that** the polyamide is a polyamide 12 (PA-12).

5. A tube according to claim 1 or claim 4, **characterized in that** the polyamide is modified to form a hydrogen barrier.

6. A tube according to claim 1, **characterized in that** it includes a bonding layer (2) bonding the intermediate layer (3) to the inner layer (1).

7. A tube according to claim 1, **characterized in that** it includes a bonding layer (4) bonding the intermediate layer (3) to the outer layer (5).

8. A tube according to claim 6 or claim 7, **characterized in that** the bonding layer (2, 4) is based on polyamide (PA) modified to bond to the adjacent layers.

## Patentansprüche

1. Rohr, umfassend eine Innenschicht (1) aus Fluorpolymer, eine Zwischenschicht (3) aus Ethylenvinylalkohol-Copolymer (EVOH) und eine Außenschicht (5) aus Polyamid (PA).

2. Rohr nach Anspruch 1, **dadurch gekennzeichnet, dass** das Fluorpolymer ein Ethylen-Tetrafluor-Ethylen (ETFE) ist.

3. Rohr nach Anspruch 1, **dadurch gekennzeichnet, dass** das Fluorpolymer ein Polyvinylidenfluorid (PVDF) ist.

4. Rohr nach Anspruch 1, **dadurch gekennzeichnet, dass** das Polyamid ein Polyamid 12 (PA-12) ist.

5. Rohr nach Anspruch 1 oder Anspruch 4, **dadurch gekennzeichnet, dass** das Polyamid so modifiziert ist, dass es eine Barriere gegenüber Wasserstoff bildet.

6. Rohr nach Anspruch 1, **dadurch gekennzeichnet, dass** es eine Verbindungsschicht (2) zur Verbindung der Zwischenschicht (3) mit der Innenschicht (1) umfasst.

7. Rohr nach Anspruch 1, **dadurch gekennzeichnet, dass** es eine Verbindungsschicht (4) zur Verbindung der Zwischenschicht (3) mit der Außenschicht (5) umfasst.

8. Rohr nach Anspruch 6 oder Anspruch 7, **dadurch gekennzeichnet, dass** die Verbindungsschicht (2, 4) auf Basis von modifiziertem Polyamid (PA) ist, um an den angrenzenden Schichten zu haften.
